# EUROPEAN PATENT SPECIFICATION

(11) **EP 2 977 478 B1**
(45) Date of publication and mention of the grant of the patent: **06.03.2019**
(21) Application number: 13884148.1
(22) Date of filing: 29.11.2013
(51) Int. Cl.: C22C 38/04, C22C 38/02, C22C 38/42, C22C 38/44, C22C 38/46, C22C 38/48, C22C 38/50, C22C 19/05, B21B 1/22, B32B 15/01, C21D 8/02, C21D 8/12, C22C 38/58

(54) **NICKEL ALLOY CLAD STEEL HAVING EXCELLENT GRAIN BOUNDARY CORROSION RESISTANCE PROPERTIES, AND METHOD FOR PRODUCING SAME**
NICKEL-LEGIERUNG PLATTIERTER STAHL MIT HERVORRAGENDEN KORNGRENZEN-KORROSIONSBESTÄNDIGKEIT UND VERFAHREN ZUR HERSTELLUNG DAVON
ACIER REVÊTU D'UN ALLIAGE DE NICKEL PRÉSENTANT D'EXCELLENTES PROPRIÉTÉS DE RÉSISTANCE À LA CORROSION AUX JOINT DE GRAIN, ET SON PROCÉDÉ DE FABRICATION

(30) Priority: 09.05.2013 JP 2013099057; 01.11.2013 JP 2013228096
(43) Date of publication of application: 27.01.2016
(73) Proprietor: JFE Steel Corporation, Tokyo 100-0011 (JP)
(72) Inventor: KURONUMA, Yota, Tokyo 100-0011 (JP); YAZAWA, Yoshihiro, Tokyo 100-0011 (JP); KISHI, Keiichiro, Tokyo 100-0011 (JP); TACHIBANA, Shunichi, Tokyo 100-0011 (JP); MITAO, Shinji, Tokyo 100-0011 (JP); YOKOTA, Tomoyuki, Tokyo 100-0011 (JP)
(74) Representative: Hoffmann Eitle
(86) International application number: PCT/JP2013/007027
(87) International publication number: WO 2014/181385

(56) References cited:
- WO-A1-95/31579
- WO-A1-98/09751
- JP-A- H0 790 440
- JP-A- H02 296 088
- JP-A- H06 142 950
- JP-A- H06 142 950
- JP-A- S63 213 633
- JP-A- S63 213 633
- JP-A- 2004 068 134
- JP-A- 2006 274 386
- JP-A- 2010 270 400
- D.E. Camus, R.A. Jaramillo, J.A. Plybum, F.S. Suarez: "EVOLUTION OF MICROSTRUCTURE DURING HOT ROLLING OF INCONEL@ ALLOYS 625 AND 7 18", The Minerals, Metals & Materials Society, 1997, 31 December 1997 (1997-12-31), XP002756164, USA Retrieved from the Internet: URL:http://www.tms.org/superalloys/10.7449 /1997/Superalloys_1997_291_302.pdf [retrieved on 2016-04-06]
- H. L. Eiselstein and D. J. Tillack: "THE INVENTION AND DEFINITION OF ALLOY 625", Superalloys 71.8,625 and Various Derivatives, 31 December 1991 (1991-12-31), XP002756165, USA Retrieved from the Internet: URL:http://www.tms.org/superalloys/10.7449 /1991/Superalloys_1991_1_14.pdf [retrieved on 2016-04-06]
- Anonymous: "Data Sheet: Alloy 625", Corrosion Materials , 22 December 1993 (1993-12-22), XP002756166, Retrieved from the Internet: URL:http://www.corrosionmaterials.com/docu ments/dataSheet/alloy625DataSheet.pdf [retrieved on 2016-04-06]

## Description

### Technical Field

The present invention relates to a nickel-base alloy-clad steel plate having good resistance to intergranular corrosion and a producing method thereof.

### Background Art

In recent years, because of energy issues, energy resource development has been pursued even in difficult-to-mine environments where mining has been considered difficult. These difficult-to-mine environments are also highly corrosive, and thus there have grown needs for corrosion resistant alloy (CRA) clad steel having superior corrosion resistance. Furthermore, industrial facilities and structures used in difficult-to-mine environments are required to achieve durability and longer availability, and be maintenance-free. Accordingly, nickel-base alloys such as Alloy 625 and Alloy 825 have gathered much attention as the material that meets the requirement.

Meanwhile, price of Ni which is the main raw material of nickel-base alloys and of alloying element Mo or Cr or the like rises steeply or fluctuates dramatically from time to time. Accordingly, since clad steels can achieve high corrosion resistance of high-alloy steels more economically than solid metals having composition of the alloy-cladding metal throughout the entire thickness thereof, clad steels are gathering much attention recently.

CRA clad steel is a steel material obtained by bonding two types of metals having different properties, such as a nickel-base alloy as a cladding metal and a low-alloy steel as a base metal. Since clad steel is prepared by metallurgically joining different types of metals, the clad steel does not undergo separation although there is a possibility that plated materials is separated from the base metal. The clad steel can also exhibit novel properties that cannot be achieved by single metals and alloys.

There are various kinds of cladding metals having various functions. Among the various kinds, it is possible to select cladding metal having a function suited for purpose of operating environment. The clad steel having the selected cladding metal can have functions comparable to solid metals. There are carbon steel and low-alloy steel suited for use in severe environments requiring high toughness and high strength other than corrosion resistance. In addition to function according to the selected cladding metal, it is possible to use the steel having high toughness and high strength as the base metal of clad steel.

The clad steel uses less alloying elements than solid metals and can reliably offer corrosion resistance comparable to solid metals. Further, the clad steel can reliably offer strength and toughness comparable to carbon steel and low-alloy steel. Thus, the clad steel can achieve both economic efficiency and functionality.

In view of the above, clad steel that uses high-alloy cladding metals are considered to be very useful functional steel materials and the needs thereof have increased in various industrial fields in recent years.

However, clad steel has problems inherent in composite materials. Once corrosion-resistant materials such as stainless steel experience precipitation of intermetallic compounds, carbides, nitrides, etc., the Cr concentration in the peripheral areas of the precipitates is decreased. Typically, such precipitates preferentially deposit in crystal grain boundaries and thus Cr depletion regions are continuously formed along the grain boundaries. This phenomenon is known as sensitization. A highly sensitized material exposed to a corrosive environment experiences preferential corrosion in Cr depletion regions and falling of crystal grains, and thus has poor resistance to intergranular corrosion.

To address this, it is a typical practice to perform a solution treatment on a solid metal after rolling so as to dissolve precipitates. However, if a clad steel is heated and held at such a high temperature that causes precipitates to dissolve, crystal grains of the low-alloy steel used as the base metal will coarsen and mechanical properties will be significantly degraded, which is a problem.

Under such circumstances, studies have been made on a method for producing clad steel that does not require a solution treatment and that has good corrosion resistance.

Patent Literatures 1 and 2 disclose a production method by which corrosion resistance and base metal strength and low-temperature toughness are achieved simultaneously without performing a solution treatment.

Patent Literatures 3 and 4 disclose a method for obtaining corrosion resistance of a cladding metal and toughness of a base metal by specifying the chemical composition of the cladding metal and the rolling and cooling conditions.

Patent Literature 5 describes a highly corrosion resistant clad steel pipe for line pipe, wherein the base material composed of a carbon steel or low-alloy steel is combined with a cladding material composed of highly corrosion resistant steel. The cladding material is constituted of a steel which has a composition consisting of, by weight, ≤0.02% C, ≤1% Si, ≤2% Mn, ≤0.03% P, ≤0.005% S, 30-60% Ni, 18-25% Cr, >5-12% Mo, ≤0.05% N, and the balance Fe with inevitable impurities and further containing, if necessary, one or more kinds among 0.3-3% Cu, 0.3-2% W, and 0.3-2% Nb.

Non-Patent Literature 1 describes a microstructural evaluation of hot rolled INCONEL® alloys 625 and 718.

Non-Patent Literature 2 describes a definition of INCONEL® alloy 625 including its typical composition and properties such as the corrosion resistance.

### Citation List

### Patent Literature

PTL 1: Japanese Examined Patent Application Publication No. 8-25041
PTL 2: Japanese Examined Patent Application Publication No. 8-25040
PTL 3: Japanese Unexamined Patent Application Publication No. 5-154672
PTL 4: Japanese Unexamined Patent Application Publication No. 5-214499
PTL 5: JP S63 213633 A

### Non-Patent Literature

Non-Patent Literature 1: D.E. Camus, R.A. Jaramillo, J.A. Plybum, F.S. Suarez: "Evolution of microstructure during hot rolling of INCONEL® Alloys 625 and 718", The Minerals, Metals & Materials Society, December 31, 1997
Non-Patent Literature 2: H.L. Eiselstein and D.J. Tillack: "The invention and definition of alloy 625", Superalloys 718, 625 and Various Derivatives, December 31, 1991

### Summary of Invention

### Technical Problem

Although precipitates are the cause of degradation of corrosion resistance, there have been no reports that provide specifications for precipitates in cladding metals from the viewpoint of corrosion resistance of the nickel-base alloy-clad steel plate.

The present invention is directed to adjusting the precipitation state of the precipitates in nickel-base alloys. An object thereof is to improve resistance to intergranular corrosion by limiting the amount of Cr that exists as precipitates so as to adjust the amount of carbide precipitates. In addition to the improvement, the object of the present invention is to improve resistance to intergranular corrosion by adjusting the aspect ratio of the crystal grains in a cladding metal that serve as carbide precipitation sites so as to finely disperse carbides over the grain boundaries.

### Solution to Problem

Clad steel has problems inherent in composite materials. Once corrosion-resistant materials such as stainless steel experience precipitation of intermetallic compounds, carbides, nitrides, etc., corrosion resistance is degraded. Thus, typically, a solution treatment is performed after rolling to dissolve the precipitates if the material concerned is a solid metal. However, in the case of clad steel, heating and holding the clad steel at such a high temperature that causes precipitates to dissolve will coarsen the crystal grains of low-alloy steel used as the base metal and significantly degrade mechanical properties, which is problem.

As described above, heating and holding a clad steel at such a high temperature that causes precipitates to dissolve will coarsen the crystal grains of the low-alloy steel used as the base metal and significantly degrade mechanical properties. With this in mind, the inventors of the present invention have focused on the fact that the precipitates in the cladding metal of a nickel-base alloy-clad steel plate are the cause of degradation of corrosion resistance and studied the relationship between corrosion resistance and the precipitates of the nickel-base alloy. As a result, the inventors have found that precipitation of intermetallic compounds is rare in the production of nickel-base alloy-clad steel plates and that the degradation of corrosion resistance is caused by precipitation of carbides. The inventors have also clarified the relationship between the corrosion resistance of the cladding metal and the amounts of the corrosion-resistant elements contained in the precipitates and found that there is a correlation between the amount of Cr existing as precipitates and the resistance to intergranular corrosion. It has also been found that the precipitates become more finely dispersed as the length of the grain boundaries increases and thus sensitization is suppressed, which shows that there is a correlation between the crystal grain aspect ratio of the cladding metal and the resistance to intergranular corrosion.

The present invention can be summarized as follows:
[1] A nickel-base alloy-clad steel plate having good resistance to intergranular corrosion, wherein an amount of Cr that exists as carbides in a cladding metal composed of a nickel-base alloy is 0.030% or less on a mass percent basis, and an aspect ratio of crystal grains of the cladding metal is 1.5 or more, and wherein the cladding metal consists of, in terms of mass percent, C: 0.030% or less, Si: 0.02% to 0.50%, Mn: 0.02% to 0.50%, P: 0.015% or less, S: 0.015% or less, Cr: 20.0% to 23.0%, Mo: 8.0% to 10.0%, Fe: 5.0% or less, Al: 0.02% to 0.40%, Ti: 0.10% to 0.40%, Nb + Ta: 3.15% to 4.15%, and the balance consisting of Ni and incidental impurities wherein the incidental impurities include, in terms of mass percent, N: 0.01% or less, O: 0.001% or less, V: 0.04% or less, B: 0.0005% or less, and W: 0.3% or less.
[2] A method for producing a nickel-base alloy-clad steel plate having good base metal toughness and good resistance to intergranular corrosion, by using a raw material of the nickel-base alloy-clad steel plate according to Claim 1, the method including steps of: heating the raw material to 1050°C or higher and 1200°C or lower; performing hot rolling to material after the heating, the hot rolling in which a reduction ratio at 1000°C or higher is 2 or more, a reduction ratio of controlled rolling in a temperature zone of 950°C or lower is 1.5 or more and 4 or less, and a rolling finish temperature is 700°C or higher; immediately after the hot rolling, performing accelerated cooling to the material at a cooling rate of 1 °C/s or more until a cooling end temperature of 500°C or lower; and performing natural cooling to the material after the accelerated cooling. Advantageous Effects of Invention

The present invention can provide a nickel-base alloy-clad steel plate having good resistance to intergranular corrosion.

### Description of Embodiments

### 1. Amount of precipitated Cr

The amount of precipitated Cr is the amount of Cr that exists as precipitates. Chromium (Cr) is widely known as an element that forms passivation films. When chromium atoms in the nickel-base alloy matrix gather on the precipitates along the grain boundaries, the Cr concentration in the peripheral areas of the precipitates is decreased. This phenomenon is known as sensitization. A sensitized material put in a corrosive environment will have these Cr depletion regions preferentially corroded. When the amount of precipitated Cr on a mass percent basis exceeds 0.030%, sensitization progresses and crystal grains will fall. Accordingly, the amount of precipitated Cr is to be 0.030% or less.

The carbides precipitating in the nickel-base alloy are, for example, MC, M₆C, M₂₃C₆ (M represents a metal element), etc., and intermetallic compounds are, for example, a Laves phase, a δ phase, a γ" phase, etc. Among these, MC is mainly NbC and precipitation of MC does not significantly affect corrosion resistance. In a nickel-base alloy, precipitation of intermetallic compounds occurs more slowly than precipitation of carbides and rarely causes degradation of corrosion resistance. Accordingly, M₆C and M₂₃C₆ cause degradation of corrosion resistance of nickel-base alloys. Actually, since M₆C and M₂₃C₆ contain a large amount of Cr and precipitate along the grain boundaries of nickel-base alloys, M₆C and M₂₃C₆ cause sensitization.

Nickel-base alloys described in the subject application mean alloys whose Ni content is largest among the alloy components.

### 2. Aspect ratio of crystal grains

As discussed above, sensitization of nickel-base alloys occurs due to carbides precipitating along the grain boundaries. As the aspect ratio of the crystal grains increases, the grain boundary length increases and the carbide precipitation sites become more dispersed. Thus, sensitization is suppressed. Since sensitization is suppressed at an aspect ratio of 1.5 or more, the aspect ratio of crystal grains of the nickel-base alloy is to be 1.5 or more.

Corrosion of nickel-base alloys is related to the aspect ratio of crystal grains. The reason thereof is based on not only sensitization caused by preferential corrosion of the low-Cr-content regions described above but also other factor that as the aspect ratio increases, the amount of segregated P and S per unit grain boundary length decreases, though P and S segregate in crystal grain boundaries and degrade corrosion resistance . The above factor is example and there are another factors than the above.

### 3. Composition of cladding metal

The cladding metal in the present invention is as follows. Note that "%" means "% by mass" unless otherwise noted.

### C: 0.030% or less

Carbon (C) precipitates as carbides in grain boundaries due to heat history created by rolling and heating steps and adversely affects corrosion resistance. Thus, the C content should be low. If C content exceeds 0.030%, precipitation of carbides accelerates. If the amount of precipitated Cr is increased, corrosion resistance is degraded. Thus, the C content is to be 0.030% or less and preferably 0.010% or less.

### Si: 0.02% to 0.50%

Silicon (Si) is an element effective for deoxidization during steel making and 0.02% or more of Si is to be added. However, Si is also an element that promotes precipitation of M₆C. At a Si content exceeding 0.50%, the amount of precipitated Cr is increased and sensitization is likely to occur. Accordingly, the Si content is to be in the range of 0.02% to 0.50% and preferably in the range of 0.02% to 0.20%.

### Mn: 0.02% to 0.50%

Manganese (Mn) is also an element effective for deoxidation and 0.02% or more of Mn is to be added. However, at a Mn content exceeding 0.50%, nonmetal inclusions remain, corrosion resistance is degraded, and hot workability is degraded. Thus, the Mn content is to be in the range of 0.02% to 0.50% and preferably in the range of 0.02% to 0.15%.

### P: 0.015% or less

Phosphorus (P) is an impurity element. Phosphorus (P) segregates in grain boundaries and degrades corrosion resistance when rolling is performed at 1000°C or higher to ensure bonding of the clad steel plate. Thus, the P content is to be 0.015% or less and preferably 0.005% or less.

### S: 0.015% or less

Sulfur (S) is also an impurity element as is P, and segregates in grain boundaries and degrades corrosion resistance when rolling is performed at 1000°C or higher to ensure bonding of the clad steel plate. Thus, the S content is to be 0.015% or less and preferably 0.001% or less.

### Cr: 20.0% to 23.0%

Chromium (Cr) is an element that forms a highly protective oxide film on a surface of metal and improves pitting resistance and resistance to intergranular corrosion. However, excessive incorporation of Cr increases the amount of precipitated Cr and induces sensitization. Accordingly, in view of the balance between Ni and other alloys, the Cr content is to be in the range of 20.0% to 23.0% and preferably in the range of 21.0% to 22.0%.

### Mo: 8.0% to 10.0%

Molybdenum (Mo) improves pitting resistance and crevice corrosion resistance. When used in combination with Ni, Mo improves stress corrosion cracking susceptibility in a sour gas environment. Thus, the Mo content is to be in the range of 8.0% to 10.0% considering the amounts of Ni and other alloying elements to be added. The Mo content is more preferably in the range of 9.0% to 10.0%.

### Fe: 5.0% or less

Iron (Fe) is an impurity that cannot be avoided if ferrochromium, ferromolybdenum, or the like is used as a raw material. At an Fe content exceeding 5.0%, the Ni content is decreased and the corrosion resistance is degraded. Thus, the Fe content is to be 5.0% or less and preferably 3.5% or less.

### Al: 0.02% to 0.40%

Aluminum (Al) is an element effective for deoxidation and 0.02% or more of Al is to be added. However, at an Al content exceeding 0.40%, stress corrosion cracking resistance is degraded. Thus, the Al content is to be in the range of 0.02% to 0.40%, preferably in the range of 0.02% to 0.20%, and more preferably in the range of 0.02% to 0.15%.

### Ti: 0.10% to 0.40%

Titanium (Ti) is effective as an element that immobilizes C and is added in an amount of 0.10% or more. However, excessive incorporation of Ti causes Ti to precipitate as intermetallic compounds at the bonding interface in the clad steel plate and degrades bondability. Thus, the Ti content is to be in the range of 0.10% to 0.40% and preferably in the range of 0.10% to 0.30%.

### Nb + Ta: 3.15% to 4.15%

Niobium (Nb) and tantalum (Ta) are also elements that contribute to immobilization of C. However, excessive incorporation of Nb and Ta causes Nb and Ta to precipitate as intermetallic compounds at the bonding interface of the clad steel and degrades bondability. Thus, the total content of Nb and Ta is to be in the range of 3.15% to 4.15% and preferably in the range of 3.50% to 4.00%.

### Balance

The balance of the components of the cladding metal includes Ni and incidenatal impurities. Nickel (Ni) is an element that improves corrosion resistance, and, in particular, dramatically improves stress corrosion cracking resistance in a sour environment. As discussed earlier, corrosion resistance is further improved by adding Ni together with Cr and Mo. Examples of the incidental impurities include N, O, V, B, and W. These elements do not affect corrosion resistance as long as their contents are in the following ranges: N: 0.01% or less, O: 0.001% or less, V: 0.04% or less, B: 0.0005% or less, and W: 0.3% or less.

### 4. Method for producing nickel-base alloy-clad steel plate

A method for producing a nickel-base alloy clad-steel plate according to the present invention will now be described.

The cladding metal of the clad steel according to the present invention is controlled within the composition range described above and can be prepared by a conventional method or the like. The base metal of the clad steel is selected according to the usage of the clad steel or the like. For example, the base metal can be a carbon steel or, for a use in pipelines of natural gas etc., a low-alloy steel containing, on a mass% basis, C: 0.26% or less, Mn: 1.65% or less, P: 0.030% or less, S: 0.030% or less, and Nb + V + Ti: 0.15% or less. These cladding metal and base metal are combined to make a slab assembly for clad rolling, and the slab assembly is clad-rolled to obtain a clad steel plate. For the purposes of the subject application, a raw material of a nickel-base alloy-clad steel plate refers to a slab assembly for clad rolling in which a cladding metal and a base metal are combined.

### Heating temperature: 1050°C or higher and 1200°C or lower

In order to sufficiently dissolve the cladding metal during heating, the heating temperature is to be 1050°C or higher. However, at an excessively high temperature, hot workability of the cladding metal is degraded and coarsening of the crystal grains of the base metal causes degradation in toughness. Thus, the heating temperature is to be in the range of 1050°C or higher and 1200°C or lower and preferably in the range of 1050°C or higher and 1150°C or lower.

### Reduction ratio at 1000°C or higher: 2 or more

In order to obtain satisfactory cladding metal/base metal interfacial bonding, the reduction ratio at 1000°C or higher needs to be 2 or more. Nickel-base alloys have larger deformation resistance than low-alloy steels and have a drawback in that good bondability is difficult to obtain in producing clad materials. However, in a high-temperature zone of 1000°C or higher, the difference in deformation resistance between the nickel-base alloy and the low-alloy steel is small. Accordingly, a good cladding metal/base metal interfacial bonding strength can be achieved when the reduction ratio (= (plate thickness before rolling) / (plate thickness after rolling)) at 1000°C or higher is 2 or more. Accordingly, the reduction ratio at 1000°C or higher is to be 2 or more and preferably 3 or more.

### Controlled rolling: Reduction ratio of 1.5 or more and 4 or less at 950°C or lower

Based on the assumption that finish rolling is to be ended at 700°C or higher, controlled rolling is controlled so that the temperature of starting the controlled rolling is 950°C or lower and the reduction ratio is 1.5 or more and 4 or less in order to reliably maintain strength and toughness of the base metal. In order to adjust the crystal grain aspect ratio in the cladding metal to 1.5 or more, the reduction ratio at 950°C or lower needs to be 1.5 or more. At a reduction ratio exceeding 4, sufficient reduction ratio in the high-temperature zone cannot be reliably obtained and bondability is degraded.

The reduction ratio is preferably 2 or more and 3.5 or less and more preferably 2.5 or more and 3 or less although this depends on the finished plate thickness.

### Rolling finish temperature: 700°C or higher

Since toughness of the base metal is degraded when the rolling finish temperature is lower than 700°C, the rolling finish temperature is to be 700°C or higher.

### Cooling rate: 1 °C/s or more, cooling end temperature: 500°C or lower

After rolling, cooling is performed at a cooling rate of 1 °C/s or more to a temperature of 500°C or lower in order to reliably maintain strength and toughness of the base metal. If the cooling rate in a temperature range from a rolling end temperature of 700°C or higher to 500°C is less than 1 °C/s, crystal grains of the base metal become significantly coarse and toughness is degraded. When the cooling end temperature is higher than 500°C, sufficient strength cannot be obtained. Thus, after rolling, cooling is performed at a cooling rate of 1 °C/s or more to at the temperature of 500°C or lower.

### 5. Methods for evaluating materials

Extraction of precipitates was performed by electrolytic extraction (also known as a SPEED method) in a 10 vol% acetylacetone-1 mass% tetramethylammonium chloride-methanol mixture (known as a 10% AA solution). The extraction residue recovered on the filter by filtration was analyzed by X-ray diffraction (XRD) so as to identify types of precipitates. The extraction residue was dissolved in a mixed acid (mixed acid composition ratio = 10 ml sulfuric acid:10 ml nitric acid:5 ml perchloric acid:10 ml water) and inductively coupled plasma (ICP) emission spectrometry was performed to determine the amount of precipitated Cr.

Next, the method for evaluating resistance to intergranular corrosion of the nickel-base alloy serving as a cladding metal is described.

Resistance to intergranular corrosion was evaluated by a 65% nitric acid test (Huey test) for stainless steel according to JIS G0573.

According to the test method, a test specimen was immersed in a 65% nitric acid solution for 48 hours, the corrosion rate (g/m²·h) was calculated from the change in weight between before and after the test, and the same test specimen was again immersed in a new boiling 65% nitric acid solution. This 48 hour immersion test was repeated five times and the average of the corrosion rates observed in the five cycles was used in evaluating the resistance to intergranular corrosion. Those samples with an average corrosion rate of 0.75 g/m²·h or less were evaluated as having good resistance to intergranular corrosion.

The bondability between the cladding metal and the base metal was evaluated by a shear strength test according to JIS G0601.

The shear strength test is a method with which a cladding metal is separated from a base metal in a direction parallel to the bonding surface and the maximum shear strength required for the separation is used to evaluate the bondability. The evaluation standard is that samples with a shear stress of 300 MPa or more are evaluated as having good bondability.

The toughness of the base metal was evaluated through a drop weight tear test (DWTT) at -20°C. In the present invention, samples from which a shear area ratio of 85% or more is observed in the DWTT test at -20°C were evaluated as having good base metal toughness.

### Aspect ratio of crystal grains in cladding metal

The crystal grain aspect ratio in the cladding metal was calculated by taking a photograph of a microstructure of a cladding metal (L plane, at 1/4t position) subjected to etching, drawing line segments of a particular length in a rolling direction and a plate thickness direction, determining the average of the length of the crystal grain in the rolling direction and the length of the crystal grain in the plate thickness direction, and calculating the aspect ratio by aspect ratio = (length of crystal grain in rolling direction) / (length of crystal grain in plate thickness direction).

### EXAMPLE 1

Comparisons of Examples of the present invention and Comparative Examples are described below.

Thirteen cladding metals (ten steels according to the invention ("Invention steel") and three steels of comparative example ("Comparative steel")) and two base metals shown in Table 1 were used to prepare cladding metals and base metals. Clad steels were fabricated by using the cladding metals and the base metals, and the amount of precipitated Cr and the resistance to intergranular corrosion were investigated. Slabs for the clad steels using the cladding metals were heated at a heating temperature of 1100°C and then rolling was started. The reduction ratio at 1000°C or higher was controlled to 2.5, the reduction ratio at 950°C or lower was controlled to 2.5, and rolling was ended at 750°C. Accelerated cooling was immediately started at a cooling rate of 5 °C/s and ended at 350°C. The results are shown in Table 2.

### [Table 1]

**Table 1**

| Cladding metal No. | Chemical composition (unit: mass%) | | | | | | | | | | | | Notes |
|---|---|---|---|---|---|---|---|---|---|---|---|---|---|
| | C | Si | Mn | P | S | N i | Cr | Mo | Fe | Al | Ti | Nb+Ta | |
| 1 | 0.022 | 0.16 | 0.12 | 0.005 | 0.001 | bal. | 21.0 | 10.0 | 3.3 | 0.15 | 0.20 | 3.99 | Invention steel |
| 2 | 0.010 | 0.12 | 0.07 | 0.003 | 0.001 | bal. | 21.9 | 9.1 | 3.2 | 0.19 | 0.30 | 3.72 | Invention steel |
| 3 | 0.030 | 0.20 | 0.10 | 0.004 | 0.001 | bal. | 20.0 | 9.8 | 3.3 | 0.18 | 0.27 | 4.10 | Invention steel |
| 4 | 0.016 | 0.15 | 0.13 | 0.003 | 0.001 | bal. | 23.0 | 8.6 | 3.1 | 0.18 | 0.25 | 3.15 | Invention steel |
| 5 | 0.030 | 0.13 | 0.10 | 0.004 | 0.001 | bal. | 21.5 | 8.0 | 3.0 | 0.13 | 0.26 | 4.11 | Invention steel |
| 6 | 0.014 | 0.16 | 0.13 | 0.003 | 0.001 | bal. | 22.1 | 9.2 | 2.9 | 0.20 | 0.22 | 4.09 | Invention steel |
| 7 | 0.013 | 0.18 | 0.15 | 0.003 | 0.001 | bal. | 22.3 | 8.4 | 3.2 | 0.16 | 0.25 | 3.89 | Invention steel |
| 8 | 0.009 | 0.16 | 0.14 | 0.004 | 0.001 | bal. | 21.6 | 8.9 | 3.3 | 0.18 | 0.22 | 4.15 | Invention steel |
| 9 | 0.019 | 0.18 | 0.10 | 0.004 | 0.001 | bal. | 20.9 | 9.3 | 3.5 | 0.17 | 0.26 | 3.76 | Invention steel |
| 10 | 0.016 | 0.17 | 0.13 | 0.003 | 0.001 | bal. | 21.6 | 9.7 | 3.1 | 0.19 | 0.28 | 3.15 | Invention steel |
| 11 | 0.038 | 0.16 | 0.14 | 0.003 | 0.001 | bal. | 21.5 | 9.2 | 3.3 | 0.16 | 0.28 | 3.68 | Comparative steel |
| 12 | 0.023 | 0.51 | 0.12 | 0.003 | 0.001 | bal. | 22.5 | 9.3 | 3.1 | 0.17 | 0.28 | 3.75 | Comparative steel |
| 13 | 0.029 | 0.18 | 0.11 | 0.003 | 0.001 | bal. | 23.5 | 9.8 | 3.2 | 0.19 | 0.22 | 3.22 | Comparative steel |

| Base metal No. | Chemical composition (unit: mass%) | | | | | | | | | | | | |
|---|---|---|---|---|---|---|---|---|---|---|---|---|---|
| | C | Si | Mn | P | S | Cu | Ni | Cr | Mo | Nb | V | Ti | B |
| A A | 0.043 | 0.13 | 1.46 | 0.007 | 0.0006 | 0.20 | 0.17 | 0.28 | 0.15 | 0.035 | - | 0.013 | - |
| B B | 0.035 | 0.13 | 1.52 | 0.006 | 0.0005 | 0.02 | 0.05 | 0.26 | 0.17 | 0.029 | 0.052 | 0.014 | - |

| | | | | | | | | | | | | | |
|---|---|---|---|---|---|---|---|---|---|---|---|---|---|
| Note: Underlined items are outside the range of Claim 4. | | | | | | | | | | | | | |

### [Table 2]

**Table 2**

| Cladding metal No. | Base metal No. | Cr precipitates | | Resistance to intergranular corrosion | Note |
|---|---|---|---|---|---|
| | | Type | Amount of precipitated Cr (mass%) | Corrosion rate (g/m²· hr) | |
| 1 | A A | M₆C, M₂₃C₆ | 0.016 | 0.62 | Invention example |
| 2 | B B | M₆C, M₂₃C₆ | 0.011 | 0.60 | Invention example |
| 3 | A A | M₆C, M₂₃C₆ | 0.026 | 0.67 | Invention example |
| 4 | B B | M₆C, M₂₃C₆ | 0.016 | 0.61 | Invention example |
| 5 | A A | M₆C, M₂₃C₆ | 0.029 | 0.69 | Invention example |
| 6 | B B | M₆C, M₂₃C₆ | 0.019 | 0.61 | Invention example |
| 7 | A A | M₆C, M₂₃C₆ | 0.013 | 0.58 | Invention example |
| 8 | B B | M₆C, M₂₃C₆ | 0.009 | 0.58 | Invention example |
| 9 | A A | M₆C, M₂₃C₆ | 0.014 | 0.63 | Invention example |
| 10 | B B | M₆C, M₂₃C₆ | 0.015 | 0.64 | Invention example |
| 11 | A A | M₆C, M₂₃C₆ | 0.038 | 0.91 | Comparative example |
| 12 | B B | M₆C, M₂₃C₆ | 0.034 | 0.78 | Comparative example |
| 13 | A A | M₆C, M₂₃C₆ | 0.032 | 0.77 | Comparative example |

| | | | | | |
|---|---|---|---|---|---|
| Note: Underlined items are outside the range of Claim 1. | | | | | |

Cladding metals of Nos. 1 to 10 of the invention steels contained 0.030% or less of precipitated Cr and exhibited good resistance to intergranular corrosion. In contrast, the cladding metal No. 11 whose C content exceeded the upper limit, the cladding metal No. 12 whose Si content exceeded the upper limit, and the cladding metal No. 13 whose Cr content exceeded the upper limit compared to the present invention contained large amounts of precipitated Cr and thus exhibited poor resistance to intergranular corrosion.

Changes in properties of nickel-base alloy-clad steel plates caused by production conditions will now be described.

Cladding metals Nos. 1 to 13 shown in Table 1 were used as the nickel-based alloys to be used as the cladding metal. Base metals Nos. AA and BB in Table 1 which are low-carbon steels having compositions equivalent to API Grade X65 were used as the base metal.

The production conditions for clad steels are shown in Table 3 and the test results are shown in Tables 4-1, 4-2, 5, and 6.

### [Table 3]

**Table 3**

| Production method No. | Heating temperature (°C) | Reduction ratio at 1000°C or higher | Reduction ratio at 950°C or lower | Rolling finish temperature (°C) | Cooling rate (°C/sec) | Cooling end temperature (°C) | Note |
|---|---|---|---|---|---|---|---|
| A | 1100 | 2.5 | 2.5 | 750 | 5 | 350 | Invention example |
| B | 1100 | 2.0 | 3.5 | 750 | 5 | 500 | Invention example |
| C | 1100 | 2.5 | 2.5 | 700 | 5 | 400 | Invention example |
| D | 1150 | 2.5 | 2.5 | 750 | 5 | 400 | Invention example |
| E | 1100 | 1.5 | 3.5 | 750 | 5 | 450 | Comparative example |
| F | 1100 | 2.0 | 1.4 | 750 | 5 | 400 | Comparative example |
| G | 1100 | 2.5 | 2.5 | 650 | 5 | 400 | Comparative example |
| H | 1100 | 2.5 | 2.5 | 750 | 0.5 (only natural cooling) | - | Comparative example |
| I | 1100 | 2.5 | 1.2 | 900 | 5 | 400 | Comparative example |

| | | | | | | | |
|---|---|---|---|---|---|---|---|
| Note: Underlined items are outside the range of Claim 5. | | | | | | | |

### [Table 4-1]

**Table 4-1**

| Level | Cladding metal No. | Base metal No. | Production method No. | Cr precipitates | | Resistance to intergranular corrosion | Bondability | Base metal drop weight property | Note |
|---|---|---|---|---|---|---|---|---|---|
| | | | | Type | Amount of precipitated Cr (mass%) | Corrosion rate (g/m²· hr) | Shear strength (MPa) | DWTT -20°C SA (%) | |
| 1 | 1 | A A | A | M₆C, M₂₃C₆ | 0.016 | 0.62 | 385 | 94 | Invention example |
| 2 | 2 | B B | A | M₆C, M₂₃C₆ | 0.011 | 0.60 | 410 | 91 | Invention example |
| 3 | 3 | A A | A | M₆C, M₂₃C₆ | 0.026 | 0.67 | 396 | 96 | Invention example |
| 4 | 4 | B B | A | M₆C, M₂₃C₆ | 0.016 | 0.61 | 376 | 89 | Invention example |
| 5 | 5 | A A | A | M₆C, M₂₃C₆ | 0.029 | 0.69 | 416 | 97 | invention example |
| 6 | 1 | A A | E | M₆C, M₂₃C₆ | 0.028 | 0.72 | 364 | 94 | Invention example |
| 7 | 1 | B B | F | M₆C, M₂₃C₆ | 0.023 | 0.68 | 385 | 70 | Invention example |
| 8 | 1 | A A | G | M₆C, M₂₃C₆ | 0.029 | 0.74 | 402 | 72 | Invention example |
| 9 | 1 | B B | H | M₆C, M₂₃C₆ | 0.029 | 0.72 | 389 | 68 | Invention example |

| | | | | | | | | | |
|---|---|---|---|---|---|---|---|---|---|
| Note: SA denotes shear area ratio. | | | | | | | | | |

### [Table 4-2]

**Table 4-2**

| Level | Cladding metal No. | Base metal No. | Production method No. | Cr precipitates | | Resistance to intergranular corrosion | Bondability | Base metal drop weight property | Notes |
|---|---|---|---|---|---|---|---|---|---|
| | | | | Type | Amount of precipitated Cr (mass%) | Corrosion rate (g/m²· hr) | Shear strength (MPa) | DWTT -20°C SA (%) | |
| 10 | 11 | A A | A | M₆C, M₂₃C₆ | 0.036 | 0.91 | 398 | 95 | Comparative example |
| 11 | 11 | B B | B | M₆C, M₂₃C₆ | 0.032 | 0.80 | 371 | 90 | Comparative example |
| 12 | 11 | A A | C | M₆C, M₂₃C₆ | 0.041 | 0.95 | 413 | 92 | Comparative example |
| 13 | 11 | B B | D | M₆C, M₂₃C₆ | 0.039 | 0.87 | 391 | 91 | Comparative example |
| 14 | 11 | A A | E | M₆C, M₂₃C₆ | 0.042 | 0.94 | 198 | 95 | Comparative example |
| 15 | 11 | B B | F | M₆C, M₂₃C₆ | 0.041 | 0.93 | 367 | 76 | Comparative example |
| 16 | 12 | A A | F | M₆C, M₂₃C₆ | 0.035 | 0.85 | 390 | 65 | Comparative example |
| 17 | 13 | B B | F | M₆C, M₂₃C₆ | 0.034 | 0.81 | 394 | 63 | Comparative example |
| 18 | 11 | A A | G | M₆C, M₂₃C₆ | 0.039 | 0.88 | 422 | 74 | Comparative example |
| 19 | 11 | B B | H | M₆C, M₂₃C₆ | 0.041 | 1.01 | 408 | 63 | Comparative example |
| 19 | 11 | B B | H | M₆C, M₂₃C₆ | 0.041 | 1.01 | 408 | 63 | Comparative example |

| | | | | | | | | | |
|---|---|---|---|---|---|---|---|---|---|
| Note: Underlined cladding metals are outside the scope of Claim 4, underlined production methods are outside the scope of Claim 5, and underlined amounts of precipitated Cr are outside the scope of Claim 1. SA: Shear area ratio | | | | | | | | | |

### [Table 5]

**Table 5**

| Level | Cladding metal No. | Base metal No. | Production method No. | Cr precipitates | Crystal grain aspect ratio of cladding metal | Resistance to intergranular corrosion | Note |
|---|---|---|---|---|---|---|---|
| | | | | Type | | Corrosion rate (g/m²· hr) | |
| 21 | 6 | B B | A | M₆C, M₂₃C₆ | 2.2 | 0.61 | Invention example |
| 22 | 7 | A A | A | M₆C, M₂₃C₆ | 2.5 | 0.58 | Invention example |
| 23 | 8 | B B | A | M₆C, M₂₃C₆ | 2.4 | 0.58 | Invention example |
| 24 | 9 | A A | A | M₆C, M₂₃C₆ | 2.2 | 0.63 | Invention example |
| 25 | 10 | B B | A | M₆C, M₂₃C₆ | 2.0 | 0.64 | Invention example |
| 26 | 11 | B B | F | M₆C, M₂₃C₆ | 1.3 | 0.93 | Comparative example |
| 27 | 12 | A A | F | M₆C, M₂₃C₆ | 1.3 | 0.85 | Comparative example |
| 28 | 13 | B B | F | M₆C, M₂₃C₆ | 1.4 | 0.77 | Comparative example |

| | | | | | | | |
|---|---|---|---|---|---|---|---|
| Note: Underlined cladding metals are outside the scope of Claim 4, underlined production methods are outside the scope of Claim 5, and underlined aspect ratios are outside the scope of Claim 2. | | | | | | | |

### [Table 6]

**Table 6**

| Level | Cladding metal No. | Base metal No. | Production method No. | Cr precipitates | | Crystal grain aspect ratio of cladding metal | Resistance to intergranular corrosion | Note |
|---|---|---|---|---|---|---|---|---|
| | | | | Type | Amount of precipitated Cr (mass%) | | Corrosion rate (g/m²· hr) | |
| 29 | 1 | A A | A | M₆C, M₂₃C₆ | 0.016 | 2.0 | 0.62 | Invention example |
| 30 | 2 | B B | B | M₆C, M₂₃C₆ | 0.013 | 2.8 | 0.61 | Invention example |
| 31 | 3 | A A | C | M₆C, M₂₃C₆ | 0.028 | 2.2 | 0.71 | Invention example |
| 32 | 4 | B B | D | M₆C, M₂₃C₆ | 0.016 | 2.2 | 0.66 | Invention example |
| 33 | 11 | A A | I | M₆C, M₂₃C₆ | 0.038 | 1.2 | 0.86 | Comparative example |
| 34 | 12 | B B | I | M₆C, M₂₃C₆ | 0.036 | 11 | 0.89 | Comparative example |
| 35 | 13 | A A | I | M₆C, M₂₃C₆ | 0.034 | 1.2 | 0.83 | Comparative example |

| | | | | | | | | |
|---|---|---|---|---|---|---|---|---|
| Note: Underlined cladding metals are outside the scope of Claim 4, underlined production methods are outside the scope of Claim 5, underlined amounts of Cr precipitates are outside the scope of Claim 1, and underlined aspect ratios are outside the scope of Claim 2. | | | | | | | | |

In Table 3, production methods A to D which are invention examples have reduction ratio, rolling finish temperature, cooling rate, and cooling end temperature all within the ranges of the invention. In contrast, production methods E to H which are comparative examples have one of these production conditions outside the ranges of the present invention.

The test results are shown in Tables 4-1 and 4-2. Levels 1 to 9 whose cladding metal components are within the ranges of the present invention contained small amounts of precipitated Cr and exhibited good resistance to intergranular corrosion. In particular, levels 1 to 5 whose cladding metal components and production methods were within the ranges of the present invention exhibited good corrosion resistance, good bondability, and good base metal drop weight properties.

In contrast, levels 10 to 19 shown in Table 4-2 all had the amount of precipitated Cr exceeding the upper limit of 0.030% and exhibited poor resistance to intergranular corrosion. In production method No. E (level 14) where the reduction ratio at 1000°C or higher was lower than the lower limit, shear strength is low and bondability is poor. In production method No. F (levels 15 to 17) where the reduction ratio at 950°C or lower was lower than the lower limit, production method No. G (level 18) where the rolling finish temperature was lower than the lower limit, and production method No. H (level 19) with a cooling rate lower than the lower limit, the shear area ratio was less than 85% in a DWTT test (drop weight properties) at -20°C and the base metal drop weight properties were poor.

The test results concerning the aspect ratio are shown in Table 5. Levels 21 to 25 which are invention examples had large crystal grain aspect ratios and good resistance to intergranular corrosion. In contrast, levels 26 to 28 whose aspect ratios were less than the lower limit had a corrosion rate exceeding 0.75 g/m²·hr and poor resistance to intergranular corrosion.

The results of the amount of precipitated Cr and the aspect ratio are shown in Table 6. Levels 29 to 32 whose amounts of precipitated Cr and aspect ratios were within the ranges of the present invention exhibited good resistance to intergranular corrosion. In contrast, in levels 33 to 35, the amount of precipitated Cr was greater than 0.030, the aspect ratio was less than 1.5, the corrosion rate exceeded 0.75 g/m²·hr, and thus the resistance to intergranular corrosion was poor.

## Claims

1. A nickel-base alloy-clad steel plate having good resistance to intergranular corrosion,
wherein an amount of Cr that exists as carbides in a cladding metal composed of a nickel-base alloy is 0.030% or less on a mass percent basis, and an aspect ratio of crystal grains of the cladding metal is 1.5 or more, and
wherein the cladding metal consists of, in terms of mass percent, C: 0.030% or less, Si: 0.02% to 0.50%, Mn: 0.02% to 0.50%, P: 0.015% or less, S: 0.015% or less, Cr: 20.0% to 23.0%, Mo: 8.0% to 10.0%, Fe: 5.0% or less, Al: 0.02% to 0.40%, Ti: 0.10% to 0.40%, Nb + Ta: 3.15% to 4.15%, and the balance consisting of Ni and incidental impurities wherein the incidental impurities include, in terms of mass percent, N: 0.01% or less, O: 0.001% or less, V: 0.04% or less, B: 0.0005% or less, and W: 0.3% or less.

2. A method for producing a nickel-base alloy-clad steel plate having good base metal toughness and good resistance to intergranular corrosion, by using a raw material of the nickel-base alloy-clad steel plate according to Claim 1, the method comprising steps of:
heating the raw material to 1050°C or higher and 1200°C or lower;
performing hot rolling to material after the heating, the hot rolling in which a reduction ratio at 1000°C or higher is 2 or more, a reduction ratio of controlled rolling in a temperature zone of 950°C or lower is 1.5 or more and 4 or less, and a rolling finish temperature is 700°C or higher;
immediately after the hot rolling, performing
accelerated cooling to the material at a cooling rate of 1 °C/s or more until a cooling end temperature of 500°C or lower; and
performing natural cooling to the material after the accelerated cooling.

## Patentansprüche

1. Mit einer Legierung auf Nickelbasis plattierte Stahlplatte, die gute Beständigkeit gegen interkristalline Korrosion aufweist,
worin eine Menge an Cr, die als Carbide in einem aus einer Legierung auf Nickelbasis bestehenden Plattierungsmetall, bezogen auf Gewichtsprozent, 0,030% oder weniger beträgt und
ein Flächenverhältnis von Kristallkörnern des Plattierungsmetalls 1,5 oder mehr beträgt und
worin das Plattierungsmetall, bezogen auf Gewichtsprozent, aus C: 0,030% oder weniger, Si: 0,02% bis 0,50%, Mn: 0,02% bis 0,50%, P: 0,015% oder weniger, S: 0,015% oder weniger, Cr: 20,0% bis 23,0%, Mo: 8,0% bis 10,0%, Fe: 5,0% oder weniger, Al: 0,02% bis 0,40%, Ti: 0,10% bis 0,40%, Nb + Ta: 3,15% bis 4,15% besteht, wobei der Rest aus Ni und unvermeidbaren Verunreinigungen besteht, worin die unvermeidbaren Verunreinigungen, bezogen auf Gewichtsprozent, N: 0,01% oder weniger, O: 0,001% oder weniger, V: 0,04% oder weniger, B: 0,0005% oder weniger und W: 0,3% oder weniger umfassen.

2. Verfahren zur Herstellung einer mit einer Legierung auf Nickelbasis plattierten Stahlplatte, welche eine gute Zähigkeit des Basismetalls und eine gute Beständigkeit gegen interkristalline Korrosion aufweist, unter Verwendung eines Rohmaterials der mit einer Legierung auf Nickelbasis plattierten Stahlplatte gemäß Anspruch 1, das Verfahren umfassend die Schritte:
Erwärmen des Rohmaterials auf 1050°C oder höher und 1200°C oder niedriger;
Warmwalzen des Materials nach dem Erwärmen, wobei das Warmwalzen, bei dem ein Reduktionsverhältnis bei 1000°C oder höher 2 oder mehr beträgt, ein Reduktionsverhältnis des kontrollierten Walzens in einer Temperaturzone von 950°C oder niedriger 1,5 oder mehr und 4 oder weniger beträgt und eine Walzendtemperatur 700°C oder höher beträgt;
unmittelbar nach dem Warmwalzen, Beschleunigtes Abkühlen des Materials mit einer Abkühlgeschwindigkeit von 1°C/s oder mehr bis zu einer Kühlendtemperatur von 500°C oder niedriger; und
Natürliches Abkühlen des Materials nach dem beschleunigten Abkühlen.

## Revendications

1. Plaque d'acier revêtue d'un alliage à base de nickel ayant une bonne résistance à la corrosion intergranulaire,
dans laquelle une quantité de Cr qui existe en tant que carbures dans un métal de revêtement composé d'un alliage à base de nickel est de 0,030% ou moins sur une base de pourcentage en masse, et un rapport d'aspect de grains cristallins du métal de revêtement est de 1,5 ou plus, et
dans laquelle le métal de revêtement est constitué de, en termes de pourcentage en masse, C: 0.030% ou moins, Si: 0.02% à 0.50%, Mn: 0.02% à 0.50%, P: 0.015% ou moins, S: 0.015% ou moins, Cr: 20.0% à 23.0%, Mo: 8.0% à 10.0%, Fe: 5.0% ou moins, Al: 0.02% à 0.40%, Ti: 0.10% à 0.40%, Nb + Ta: 3.15% à 4.15%, et le reste étant constitué de nickel et d'impuretés inévitables lesquelles impuretés inévitables comportent, en termes de pourcentage en masse, N: 0.01% ou moins, O: 0.001% ou moins, V: 0.04% ou moins, B: 0.0005% ou moins, et W: 0.3% ou moins.

2. Procédé de production d'une plaque d'acier revêtue d'un alliage à base de nickel ayant une bonne ténacité métallique de base et une bonne résistant à la corrosion intergranulaire, en utilisant un matériau brut de la plaque d'acier revêtue d'un alliage à base de nickel selon la revendication 1, le procédé comprenant les étapes de :
chauffage du matériau brut à 1050°C ou plus et 1200°C ou moins ;
réalisation d'un laminage à chaud du matériau après le chauffage, le laminage à chaud dans lequel un rapport de réduction à 1000°C ou plus est de 2 ou plus, un rapport de réduction de laminage contrôlé dans une zone de température de 950°C ou moins est 1,5 ou plus et 4 ou moins, et une température finale de laminage est 700°C ou plus ;
immédiatement après le laminage à chaud, réalisation d'un refroidissement accéléré du matériau à une vitesse de refroidissement de 1°C/s ou plus jusqu'à une température finale de refroidissement de 500°C ou moins ; et
réalisation d'un refroidissement naturel du matériau après le refroidissement accéléré.
